# EUROPEAN PATENT APPLICATION

(11) **EP 2 107 393 A1**
(43) Date of publication of application: **07.10.2009**
(21) Application number: 09156909.5
(22) Date of filing: 31.03.2009
(51) Int. Cl.: G01S 17/89, G01S 17/93, B64F 1/20, F21S 8/00, F41G 3/16, G02B 23/12

(54) **Mid infrared optical illuminator assembly**

(30) Priority: 01.04.2008 US 41541 P; 30.03.2009 US 413909
(71) Applicant: Daylight Solutions, Inc., Poway, CA 92064 (US)
(72) Inventor: Larson, Paul, Poway, CA 92064 (US); Takeuchi, Eric B., San Diego, CA 92128 (US); Weida, Miles James, Poway, CA 92064 (US); Day, Timothy, Poway, CA 92064 (US)
(74) Representative: Viering, Hans-Martin

(57) **Abstract**

An optical illuminator assembly (10) for locating an object (20) in inclement conditions (22) includes a MIR laser source (12) having a semiconductor laser that directly emits (without frequency conversion) an output beam (16) that is in the MIR range, the output beam (16) being useful for locating the object (20). Additionally, the optical illuminator assembly (10) can include a MIR imager (14) that captures an image (18) of light in the MIR range near the object (20). Further, the MIR imager (14) can include an image display (26) that displays the captured image (18). In a first example, the MIR laser source (12) and the MIR imager (14) are spaced apart, and the image (18) captured by the MIR imager (14) includes the output beam (16) from the MIR laser source (12). With this design, a person (28) operating a vehicle (24) will be able to locate the object 20 in inclement conditions 22. In a second example, the MIR laser source (12) and the MIR imager (14) are positioned in close proximity to each other. In this example, the image (18) captured by the MIR imager (14) includes at least a portion of the object (20) illuminated by the output beam (16) from the MIR laser source (12).

## Description

### RELATED INVENTION

This application claims priority on U.S. Provisional Application Serial No. 61/041,541, filed April 1, 2008 and entitled "OPTICAL ILLUMINATOR ASSEMBLY". As far as is permitted, the contents of U.S. Provisional Application Serial No. 61/041,541 are incorporated herein by reference.

### BACKGROUND

People operating an aircraft, sea vessel, military vehicles or other types of vehicles, need to be able to see in inclement conditions, such as fog, rain, snow, smoke, or dust. For example, it is well know that pilots have difficulty locating a runway in foggy conditions.

Further, emergency workers, sportsmen, and military people often need to see in inclement conditions. For example, a soldier will have difficulty targeting an enemy combatant in the foggy conditions, and smoke can significantly influence the ability of a fireman to see.

### SUMMARY

The present invention is directed to an optical illuminator assembly for locating an object. In one embodiment, the optical illuminator assembly includes a MIR laser source having a semiconductor laser that directly emits (without frequency conversion) an output beam that is in the MIR range, the output beam being useful for locating the object. Additionally, the optical illuminator assembly can include a MIR imager that captures an image of light in the MIR range near the object. Further, the MIR imager includes an image display that displays the captured image.

With this design, the optical illuminator assembly is useful for locating and/or seeing an object in inclement conditions, such as fog, rain, snow, smoke, clouds, or dust in the atmosphere. There are a number of different usages for the optical illuminator assembly. In a first example, the MIR laser source and the MIR imager are spaced apart, and the image captured by the MIR imager includes the output beam from the MIR laser source. With this design, a person operating a vehicle will be able to locate the object by locating the output beams in inclement conditions. Alternatively, in a second example, the MIR laser source and the MIR imager are positioned in close proximity to each other. In the second example, the image captured by the MIR imager includes at least a portion of the object illuminated by the output beam from the MIR laser source. With this design, emergency workers, vehicle operators hikers, sportsmen, or military people will be better equipped to locate the object in inclement conditions.

In either case, the MIR laser source illuminates the area near the object and significantly improves the image captured by the MIR imager. As a result thereof, the optical illuminator assembly can be used to quickly and accurately locate the object.

Further, in certain embodiments, because of the unique design disclosed herein, the optical illuminator assembly is very accurate and can be extremely lightweight, stable, rugged, small, self-contained, and portable.

As used herein, to be classified as a MIR laser source, the output beam of the MIR laser source has a wavelength in the range of approximately 2-20 microns. Stated in another fashion, as used herein, the MIR range is approximately 2-20 microns.

In one embodiment, the present invention is directed to a combination that includes the optical illuminator assembly, and a vehicle that transports a person. In this embodiment, the image display is viewable to the person being transported by the vehicle. This feature allows the person to "see" through inclement conditions. Further, in this example, the optical illuminator assembly can be secured to the vehicle or incorporated into a pair of goggles worn by the person.

In another embodiment, the combination includes the optical illuminator assembly, and a gun. In this embodiment, the MIR laser source is secured to the gun, and the image display is viewable to a person using the gun. With this design, the optical illuminator assembly allows a soldier to "see" their target through inclement conditions.

In yet another embodiment, the combination includes an object, and a plurality of spaced apart MIR laser sources that are positioned near the object. With this design, the MIR imager can be used to locate the object in inclement conditions. For example, the object can be an airport runway, and the plurality of spaced apart MIR laser sources can be positioned near the airport runway. With this design, an MIR imager positioned on an airplane can be used to locate the airport runway in inclement conditions. In another example, the object can be a harbor inlet, and one, or a plurality of spaced apart MIR laser sources can be positioned near the harbor inlet. With this design, an MIR imager positioned on a boat can be used to locate the harbor inlet in inclement conditions.

In certain embodiments, the MIR laser source includes a mounting base, a QC gain media that is fixedly secured to the mounting base, a cavity optical assembly that is fixedly secured to the mounting base spaced apart from the QC gain media, and a WD feedback assembly that is secured to the mounting base spaced apart from the QC gain media. In certain embodiments, the WD feedback assembly cooperates with the QC gain media to form an external cavity that lases within the MIR range. In certain embodiments, the QC gain media contains a high reflective (HR) coating on one or both facets.

Additionally, power can be directed to the QC gain media in a pulsed fashion to reduce power consumption. This allows the MIR laser source to be sufficiently powered by a battery for a longer period of time than when used in a continuous wave (CW) mode of operation. With this design, the imaging system is very portable. Alternatively, the MIR laser source can be in a CW mode of operation.

Further, the imaging system can include a temperature controller that is in thermal communication with the mounting base. In this embodiment, the temperature controller controls the temperature of the mounting base and the QC gain media. As a result of the integrated temperature controller, the illuminator assembly can be used in remote locations away from external cooling sources. In certain embodiments, the temperature controller is required to ensure a constant optical output power for consistent operation. In these embodiments, the internal temperature control allows for consistent operation in remote locations. In an alternative embodiment, the illuminator assembly can be operated without active temperature control.

The present invention is also directed to one or more methods for locating an object in inclement conditions.

### BRIEF DESCRIPTION OF THE DRAWINGS

The novel features of this invention, as well as the invention itself, both as to its structure and its operation, will be best understood from the accompanying drawings, taken in conjunction with the accompanying description, in which similar reference characters refer to similar parts, and in which:
Figure 1 is simplified illustration of a vehicle, an object, and one embodiment of an optical illuminator assembly having features of the present invention;
Figure 2A is simplified side illustration, in partial cut-away of a MIR laser source having features of the present invention;
Figure 2B is a simplified side illustration of another embodiment of a MIR laser source having features of the present invention;
Figure 2C is a simplified side illustration of another embodiment of another MIR laser source having features of the present invention;
Figure 2D is a simplified side illustration of yet another embodiment of another MIR laser source having features of the present invention;
Figure 3 is a graph that illustrates one embodiment of a power profile directed to the MIR laser source of Figure 2;
Figure 4A is a simplified side illustration of a MIR imager having features of the present invention;
Figure 4B is a simplified side illustration of another embodiment of a MIR imager having features of the present invention;
Figure 5 is simplified illustration of another vehicle, an object, and the optical illuminator assembly;
Figure 6 is simplified illustration of another vehicle, an object, and another embodiment of the optical illuminator assembly;
Figure 7 is simplified top illustration of another vehicle, an object, and another embodiment of the optical illuminator assembly;
Figure 8 is simplified side illustration of another vehicle, an object, and yet another embodiment of the optical illuminator assembly;
Figure 9 is simplified side illustration of another vehicle, an object, and still another embodiment of the optical illuminator assembly;
Figure 10 is simplified side illustration of a person, an object, and another embodiment of the optical illuminator assembly;
Figure 11 is simplified side illustration of the person, an object, and another embodiment of the optical illuminator assembly; and
Figure 12 is simplified side illustration of the person, an object, and yet another embodiment of the optical illuminator assembly.

### DESCRIPTION

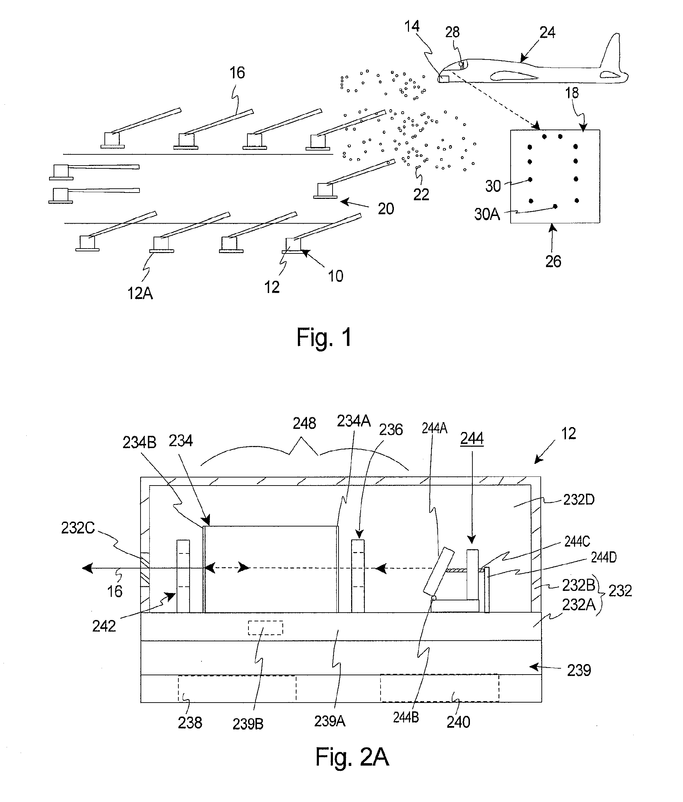

Figure 1 is a simplified illustration of a combination including a first embodiment of an optical illuminator assembly 10 having features of the present invention. In this embodiment, the optical illuminator assembly 10 includes one or more MIR laser sources 12 (illustrated as a box) and a MIR imager 14 (illustrated as a box). Each MIR laser source 12 generates an output beam 16 that is in the MIR range, and the MIR imager 14 captures an image 18 (illustrated away from the MIR imager 14 for clarity) of light in the MIR range.

As provided herein the optical illuminator assembly 10 is useful for locating and/or seeing an object 20 in inclement conditions 22 (illustrated as small circles), such as fog, rain, snow, smoke, clouds, or dust in the atmosphere. There are a number of different usages for the optical illuminator assembly 10, only a few of which are illustrated herein. In a first example, the MIR laser source 12 and the MIR imager 14 are spaced apart as illustrated in Figure 1. In the first example, the image 18 captured by the MIR imager 14 includes the output beam 16 from the MIR laser source 12. With this design, a person operating a vehicle 24 will be able to locate the object 20 (e.g. a destination) in inclement conditions 22.

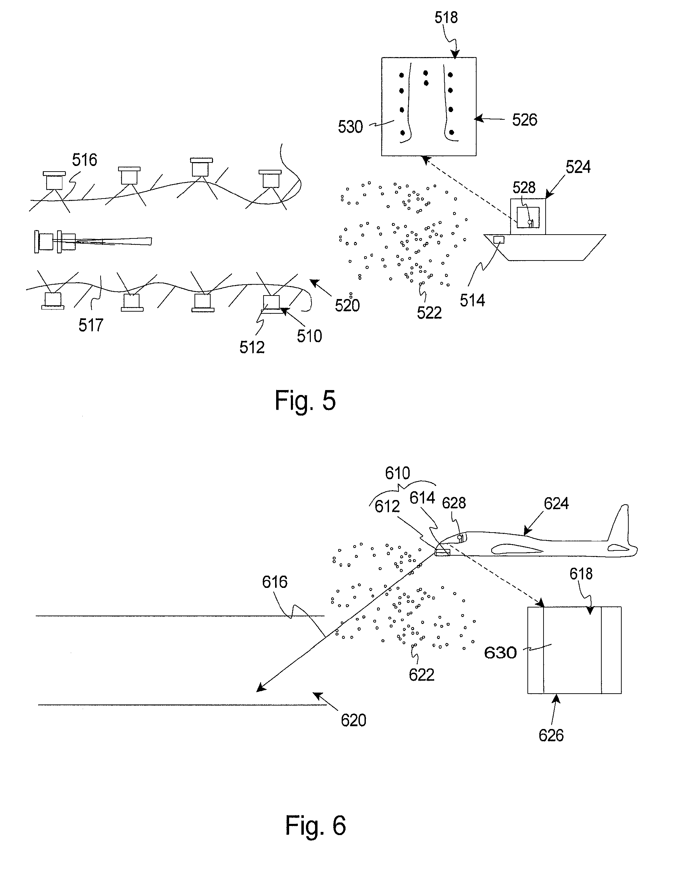

Alternatively, in a second example, the MIR laser source 12 and the MIR imager 14 are positioned in close proximity to each other as illustrated in Figures 6-12. In the second example, the image 18 captured by the MIR imager 14 includes at least a portion of the object illuminated by the output beam 16 from the MIR laser source 12. With this design, emergency workers, hikers, sportsmen, or military people will be better equipped to locate the object 20 in inclement conditions.

In either case, the MIR laser source 12 illuminates the area near the object 20 and significantly improves the image 18 captured by the MIR imager 14. As a result thereof, the optical illuminator assembly 10 can be used to quickly and accurately locate the object 20.

In the embodiment illustrated in Figure 1, the destination 20 is an airport runway, and the vehicle 24 is an aircraft, e.g. a plane, helicopter, or other airborne vehicle. Further, in Figure 1, the optical illuminator assembly 10 includes a plurality of spaced apart MIR laser sources 12 that are positioned near the airport runway 20, and each MIR laser source 12 generates the output beam 16 that is directed generally upward and towards the incoming air traffic. For example, the MIR laser sources 12 can partly or fully line one or both sides of the airport runway 20, and/or near the beginning of the runway 20, and/or near the end of the runway 20. In this design, the output beams 16 are substantially parallel to each other. In Figure 1, the MIR laser sources 12 are positioned adjacent to both sides of the airport runway 20, at the beginning of the runway 20, and at the end of the runway 20. In alternatively, non-exclusive examples, the MIR laser sources 12 are positioned on or within approximately 5, 20, 40, 50, 80, 100, or 1000 feet of the runway.

In certain embodiments, one or more of the output beam 16 can be aligned with the approach flight path of the runway 20 to provide directional navigational assistance to an airborne vehicle 24, guiding it safely to the runway 20. In certain embodiments, the laser sources 12 can be used to identify a temporary runway established in an open field during civil emergencies or military combat situations.

It should be noted that one or more of the MIR laser sources 12 can include an actuator 12A that can be used to move the direction of the output beam 16. With this design, the actuator 12A can be used to cause the direction of one or more of the output beams 16 to be changed to better assist the pilot 28 in locating the runway 20.

Moreover, in certain embodiments, the MIR imager 14 is positioned within and/or is secured to the vehicle 24. In Figure 1, the MIR imager 14 is secured to the aircraft frame and the MIR imager 14 includes an imager display 26 (illustrated away from the MIR imager 14 for clarity) that is viewable by a user 28, e.g. a pilot. In one embodiment, the MIR imager 14 is an infrared display that provides real-time, high resolution thermal images 18 that can be displayed on the imager display 26.

For example, the imager display 26 can be secured to the dash of the vehicle 24 in the cockpit of the aircraft. Alternatively, the imager display 26 can be incorporated into goggles worm by the user 28. Still alternatively, the entire MIR imager 14 can be incorporated into goggles worm by the user 28.

In Figure 1, the MIR imager 14 is directed downward towards the runway 20, and the image 18 provided the MIR imager 14 includes a plurality of spots of light 30 that are positioned adjacent to the runway 20, a set of lights 30 that mark the beginning and end of the runway, a single light 30A that provides a glide slope for a directly approaching airborne vehicle 24, or any combination thereof. With this design, the optical illuminator assembly 10 is useful for the pilot 28 to locate the outline of the runway 20 in inclement conditions 22, such as inclement weather (fog, rain, snow, smoke, clouds, dust, or other situations where gases in the atmosphere have rendered it opaque at visible and other wavelengths). In this embodiment, the optical illuminator assembly 10 can be referred to as an avionic illuminator.

In one embodiment, the MIR imager 14 can be moved relative to the aircraft 24 by the user 28. For example, in one embodiment, the MIR imager 14 can be moved side to side and/or up and down by the user 28 to change the area in which the MIR imager 14 is viewing.

The MIR laser source 12 generates the output beam 16 having a center wavelength that is within the MIR range. The design of the MIR laser source 12 can be varied according to the requirements of the optical illuminator assembly 10. In one embodiment, the MIR laser source 12 generates the output beam 16 that is fixed at a precisely selected, specific wavelength in the MIR range. Alternatively, the laser source 12 can generate an output beam 16 that is selectively adjustable (tuned) to any specific wavelength in the MIR range. Still alternatively, the MIR laser source 12 can be designed to sequentially generate output beams 16, with each subsequent output beam 16 having a different center wavelength than the previous output beam 16 that is within the MIR range.

An important aspect of the output beam 16 is the ability propagate through inclement conditions 22 (illustrated as small circles) in the atmosphere with minimal absorption. Atmospheric propagation requires an accurate settable wavelength to avoid absorption. Typically, the atmosphere is mainly water and carbon dioxide. With the present invention, the wavelength of the output beam 16 is specifically selected to avoid the wavelengths that are readily absorbed by water, carbon dioxide, or other common inclement conditions 22. Stated in another fashion, the wavelength of the output beam 16 is selected to facilitate maximum transmission through the inclement conditions 22.

In certain embodiments, the output beam 16 has a center wavelength is within the MIR range of approximately 2-20 microns. This MIR laser sources 12 provided herein are particularly useful because they can be tuned so that the output beam 16 has a wavelength that is not absorbed by the inclement conditions 22 in the atmosphere. For example, in cases of fog, water does not absorb in the 8-12 micron range. In this case, an output beam 16 having a center wavelength of approximately eight, nine, ten, eleven, or twelve microns from the MIR laser source 12 can pass through the inclement conditions 22 and will be visible in fog with the MIR imager 14. Alternatively, if the inclement conditions 22 have a different absorption profile than water, the MIR laser source 12 can be adjusted to have a wavelength that is not absorbed by these particular inclement conditions 22 (different than the 8-12 micron range).

The design of the MIR laser source 12 can be varied to achieve the desired output beam. In one embodiment, the MIR laser source 12 is a semiconductor type laser that directly emits the output beam 16 that is within MIR range without any frequency conversion. As used herein, the term semiconductor shall include any solid crystalline substance having electrical conductivity greater than insulators but less than good conductors.

Figure 2A illustrates one example of a suitable MIR laser source 12 having features of the present invention that can be used in any of the embodiments disclosed herein. In this embodiment, the MIR laser source 12 includes a source frame 232, a gain media (e.g. a quantum cascade ("QC") gain media) 234, a cavity optical assembly 236, a power source 238 (illustrated in phantom), a temperature controller 239, a laser electronic controller 240 (illustrated in phantom), an output optical assembly 242, and a wavelength dependant ("WD") feedback assembly 244 that cooperate to form an external cavity 248 laser that generates the output beam 16. The design of each of these components can be varied pursuant to the teachings provided herein. In should be noted that the laser source 12 can be designed with more or fewer components than described above. For example, in one embodiment the laser source 12 may be designed without the external cavity 248 as discussed in more detail below.

The source frame 232 supports at least some of the components of the laser source 12. In one embodiment, (i) the gain media 234, the cavity optical assembly 236, the output optical assembly 242, and the WD feedback assembly 244 are each fixedly secured, in a rigid arrangement to the source frame 232; and (ii) the source frame 232 maintains these components in precise mechanical alignment to achieve the desired wavelength of the output beam 16. In one embodiment, the WD feedback assembly is movable via a motor, screw, or other implementation, allowing tuning of the QC to achieve a variety of wavelengths.

Additionally, in Figure 2A, the power source 238, the temperature controller 239, and the laser electronic controller 240 are fixedly secured to the source frame 232. With this design, all of the critical components are fixed to the source frame 232 in a stable manner, and the laser source 12 can be self-contained and extremely portable. Alternatively, for example, the power source 238, the temperature controller 239, and/or the laser electronic controller 240 can be separate from and external to the source frame 232.

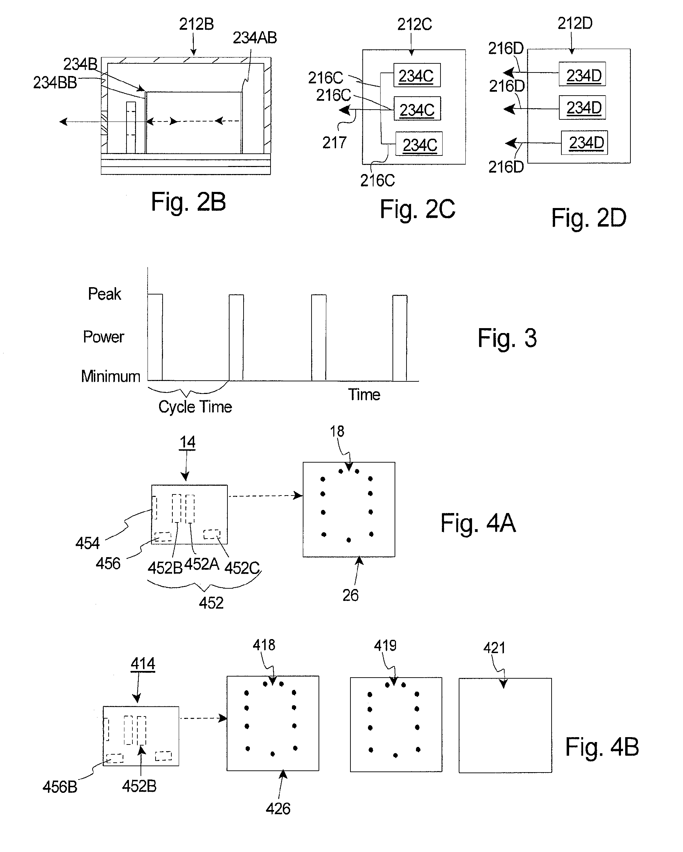

The design of the source frame 232 can be varied to achieve the design requirements of the laser source 12. In Figure 2A, the source frame 232 includes a mounting base 232A, and a cover 232B. Alternatively, for example, the source frame 232 can be designed without the cover 232B and/or can have a configuration different from that illustrated in Figure 2.

The mounting base 232A provides a rigid platform for fixedly mounting the gain media 234, the cavity optical assembly 236, the output optical assembly 242 and the WD feedback assembly 244. In Figure 2A, the mounting base 232A is illustrated as being generally rectangular plate shaped. In one embodiment, the mounting base 232A is a monolithic structure that provides structural integrity to the laser source 12. Alternatively, the mounting base 232 can have a configuration that is different than that illustrated in Figure 2A.

In certain embodiments, the mounting base 232A is made of rigid material that has a relatively high thermal conductivity. In one non-exclusive embodiment, the mounting base 232A has a thermal conductivity of at least approximately 170 watts/meter K. With this design, in addition to rigidly supporting the components of the MIR laser source 12, the mounting base 232A also readily transfers heat away from the QC gain media 234 to the temperature controller 239. For example, the mounting base 232A can be fabricated from a single, integral piece of copper, copper-tungsten or other material having a sufficiently high thermal conductivity. The one piece structure of the mounting base 232A maintains the fixed relationship of the components mounted thereto and contributes to the small size and portability of the laser source 12.

In Figure 2A, the cover 232B is shaped somewhat similar to an inverted, open rectangular box, and the cover 232B can include a transparent window 232C that allows the output beam 16 to pass through the cover 232B. In one embodiment, the cover 232B is hermetically sealed to the mounting base 232A in an air tight manner. This allows the source frame 232 to provide a controlled environment around some of the components. For example, a cover cavity 232D formed by the source frame 232 can be filled with a gas such as nitrogen or an air/nitrogen mixture to keep out moisture and humidity; or the cover cavity 232D can be subjected to a vacuum.

In certain embodiments, because of the design of the MIR laser source 12, the overall size of the source frame 232 is quite small. For example, the source frame 232 can have dimensions of approximately 20 centimeters (height) by 20 centimeters (width) by 20 centimeters (length) (where length is taken along the propagation direction of the laser beam) or less, and more preferably, the source frame 12 has dimensions of approximately 3 centimeters (height) by 4 centimeters (width) by 5 centimeters (length). Still alternatively, the source frame 232 can have dimensions of less than approximately 10 millimeters (height) by 25 millimeters (width) by 30 millimeters.

In one embodiment, the gain media 234 can be a quantum cascade ("QC") gain media that is a unipolar semiconductor laser that includes a series of energy steps built into the material matrix while the crystal is being grown. As used herein the term QC gain media 234 shall also include Interband Cascade Lasers (ICL). ICL lasers use a conduction-band to valence-band transition as in the traditional diode laser.

In one, non-exclusive embodiment, the semiconductor QCL laser chip is mounted epitaxial growth side down and a length of approximately four millimeters, a width of approximately one millimeter, and a height of approximately one hundred microns. A suitable QC gain media 234 can be purchased from Alpes Lasers, located in Switzerland.

In Figure 2A, the gain media 234 includes (i) a first facet 234A that faces the cavity optical assembly and the WD feedback assembly 244, and (ii) a second facet 234B that faces the output optical assembly 242. In this embodiment, the QC gain media 234 emits from both facets.

In one embodiment, the first facet 234A is coated with an anti-reflection ("AR") coating and the second facet 234B is coated with a reflective coating. The AR coating allows light directed from the gain media 234 at the first facet 234A to easily exit the gain media 234 and allows the light reflected from the WD feedback assembly 244 to easily enter the QC gain media 234. In contrast, the reflective coating reflects at least some of the light that is directed at the second facet 234B from the gain media 234 back into the gain medium 234. In one non-exclusive embodiment, the AR coating can have a reflectivity of less than approximately 2 percent, and the reflective coating can have a reflectivity of between approximately 2-95 percent. In this embodiment, the reflective coating acts as an output coupler for the external cavity 248.

The gain media 234 generates quite a bit of heat if operated continuously. Accordingly, the temperature controller 239 can be an important component that is needed to remove the heat, thereby permitting long lived operation of the laser source 12 and consistent optical output power.

The cavity optical assembly 236 is positioned between the gain media 234 and the WD feedback assembly 244 along a lasing axis, and collimates and focuses the light that passes between these components. For example, the cavity optical assembly 236 can include one or more lens. For example, the lens can be an aspherical lens having an optical axis that is aligned with the lasing axis. In one embodiment, to achieve the desired small size and portability, the lens has a relatively small diameter. In alternative, non-exclusive embodiments, the lens has a diameter of less than approximately 5 or 10 millimeters, and a focal length of approximately 1, 2, 3, 4, 5, 6, 7, 8, 9, 10, 11, 12, 13, 14, 15, 16, 17, 18, 19, or 20 mm and any fractional values thereof. The lens 336 can comprise materials selected from the group of Ge, ZnSe, ZnS Si, CaF, BaF or chalcogenide glass. However, other materials may also be utilized. The lens may be made using a diamond turning or molding technique. The lens can be designed to have a relatively large numerical aperture (NA). For example, the lens 336 can have a numerical aperture of at least approximately 0.6, 0.7, or 0.8. The NA may be approximated by the lens diameter divided by twice the focal length. Thus, for example, a lens diameter of 5 mm having a NA of 0.8 would have a focal length of approximately 3.1 mm.

The power source 238 provides electrical power for the gain media 234, the laser electronic controller 240, and the temperature controller 239. In Figure 2A, the power source 238 is a battery that is secured to the source frame 232. For example, the battery can be nickel metal hydrate. Alternatively, the power source 238 can be external to the source frame 232. For example, for designs where the MIR laser source 12 is fixed to the ground, the power source 238 can be a power outlet or external battery.

The temperature controller 239 can be used to control the temperature of the QC gain media 234, the mounting base 232A, and/or one or more of the other components of the MIR laser source 12. In one embodiment, the temperature controller 239 includes a thermoelectric cooler 239A and a temperature sensor 239B. The thermoelectric cooler 239A may be controlled to effect cooling or heating depending on the polarity of the drive current thereto. In Figure 2A, the thermoelectric cooler 239A is fixed to the bottom of the mounting base 232A so that the thermoelectric cooler 239A is in direct thermal communication with the mounting base 232A, and so that the thermoelectric cooler 239A can provide additional rigidity and support to the mounting base 232A. Alternatively, an intermediate plate (not shown) may be attached between the thermoelectric cooler 239A and the mounting base 232A. The temperature sensor 239B (e.g. a thermistor) provides temperature information that can be used to control the operation of the thermoelectric cooler 239A.

Additionally, or alternatively, the source frame 332 can be mounted to a heat sink (not shown) inside a larger housing (not shown) which may also contain additional equipment including cooling fans and vents to further remove the heat generated by the operation of the laser source 12.

The laser electronic controller 240 controls the operation of the laser source 12 including the electrical power that is directed to the gain media 234 and the temperature controller 239. For example, the laser electronic controller 240 can include a processor that controls the gain media 234 by controlling the electron injection current. In Figure 2A, the laser electronic controller 240 is rigidly and fixedly mounted to the source frame 232 so that the laser source 12 is portable and rugged. Alternatively, for example, the laser electronic controller 240 can be external to the source frame 232.

As provided herein, the laser electronic controller 240 can direct power to the gain media 234 in a fashion that minimizes heat generation in, and power consumption of the gain media 234 while still achieving the desired average optical power of the output beam 16. With this design, the gain media 234 operates efficiently because it is not operating at a high temperature, the need to actively cool the gain media 234 is reduced or eliminated, and the laser source 12 can be powered with a relatively small battery. One example of how power can be directed to the gain media 134 is described in more detail below and illustrated in Figure 3.

The output optical assembly 242 is positioned between the gain media 234 and the window 232D in line with the lasing axis, and the output optical assembly 242 collimates and focuses the light that exits the second facet 234B of the gain media 234. For example, the output optical assembly 242 can include one or more lens that is somewhat similar in design to the lens of the cavity optical assembly 236.

The WD feedback assembly 244 reflects the light back to the QC gain media 234, and is used to precisely adjust the lasing frequency of the external cavity 248 and the wavelength of the output beam 16. In this manner, the output beam 16 may be tuned and set to a desired fixed wavelength with the WD feedback assembly 244 without adjusting the QC gain media 234. Thus, in the external cavity 248 arrangements disclosed herein, the WD feedback assembly 244 dictates what wavelength will experience the most gain and thus dominate the wavelength of the output beam 16.

In certain embodiments, the WD feedback assembly 244 includes a wavelength dependent ("WD") reflector 244A that cooperates with the reflective coating on the second facet 234B of the QC gain media 234 to form the external cavity 248. The term external cavity 248 is utilized to designate the WD reflector 244A positioned outside of the QC gain media 234.

Further, the WD reflector 244A can be accurately tuned to adjust the lasing frequency of the external cavity 248 and the wavelength of the output beam 16, and the relative position of the WD reflector 244A can be adjusted to tune the MIR laser source 12. More specifically, the WD reflector 244A can be tuned to cause the MIR laser source 12 to generate the MIR beam 16 that is fixed at a precisely selected specific wavelength in the MIR range. With the present invention, the MIR laser source 12 can be tuned so that the MIR beam 16 is at a wavelength that allows for maximum transmission through and minimum attenuation by the atmosphere. Stated in another fashion, the wavelength of the MIR beam 16 is specifically selected to avoid the wavelengths that are readily absorbed by water, carbon dioxide, or other inclement conditions.

As non-exclusive examples, the WD feedback assembly 244 can be adjusted so that the MIR laser source 12 has an output beam 16 with a wavelength of approximately (i) five microns, (ii) eight microns, (iii) nine microns, or (iv) ten microns, or any other specific wavelength in the MIR range. In certain embodiments, with the designs provided herein, the MIR beam 16 has a relatively broad line width. In alternative, non-exclusive embodiments, the output beam 16 can have a linewidth of less than approximately 50 cm-1. The spectral width of the output beam 16 can be adjusted by adjusting the cavity parameters of the external cavity. For example, the spectral width of the output beam 16 can be increased by increasing the focal length of the cavity optical assembly 236.

The design of the WD feedback assembly 244 and the WD reflector 244A can vary pursuant to the teachings provided herein. Non-exclusive examples of a suitable WD reflector 244A includes a diffraction grating, a MEMS grating, prism pairs, a thin film filter stack with a reflector, an acoustic optic modulator, or an electro-optic modulator.

The type of adjustment done to the WD reflector 244A to adjust the lasing frequency of the external cavity 248 and the wavelength of the output beam 16 will vary according to the type of WD reflector 244A. For example, if the WD reflector 244A is a diffraction grating, rotation of the diffraction grating relative to the lasing axis and the QC gain media 234 adjusts the lasing wavelength and the wavelength of the output beam 16. More specifically, changing the incidence angle on the WD reflector 244A serves to preferentially select a single wavelength which is the first order diffracted light from the reflector surface. This light is diffracted back onto the same path as the incident beam to thereby tune the external cavity 248 to the diffracted wavelength. The diffracted laser light is received by the QC gain media 234 to provide stimulated laser emission thereby resonating the QC gain media 234 with the grating selected wavelength.

There are many different ways to precisely rotate and fix the position of the diffraction grating. In Figure 2A, the WD feedback assembly 244 includes a pivot 244B (e.g. a bearing or flexure) that secures WD reflector 244A to the source frame 232, and an adjuster 244C (e.g. a threaded screw) that can be rotated by an actuator 244D (or manually) to adjust the angle of the WD reflector 244A. It should be noted that the position of the WD reflector 244A can be adjusted during manufacturing to obtain the desired wavelength of the output beam 16.

Alternatively, the actuator 244D can be controlled to precisely rotate the WD reflector 244A during operation of the MIR laser source 12 so that the MIR laser source 12 sequentially generates an output beam 16, with each subsequent output beam 16 having a different center wavelength that is within the MIR range.

Further, it should be noted that MIR laser source 12 is tunable to a small degree by changing the temperature of the QC gain media 234 with the temperature controller 239 or by variation of the input current to the QC gain media 234.

Figure 2B is a simplified side illustration of another embodiment of a MIR laser source 212B that is somewhat similar to the MIR laser source 12 illustrated in Figure 2A and described above. However, in Figure 2B, the first facet 234AB of the QC gain media 234 is coated with a high reflective ("HR") coating inhibits the photons from exiting the first facet 234AB, reflecting them back into the wave guide to facilitate lasing. In one non-exclusive example, the HR coating can have a reflectivity of greater than approximately 95 percent for the wavelength of the QC gain media 234B. In this embodiment, the MIR laser source 212B still emits from the second facet 234BB, but the MIR laser source 212B does not have an external cavity 248 (illustrated in Figure 2B).

Figure 2C is a simplified side illustration of another embodiment of another MIR laser source 212C having features of the present invention. In this embodiment, the MIR laser source 212C includes a plurality of QC gain medias 234C (three are illustrated) that each generates an output beam 216C that is combined to form an overall output beam 217. It should be noted that many of the components necessary to combine the output beams 216C and tune the QC gain medias 234C have been omitted from Figure 2C.

With the design illustrated in Figure 2C, in one embodiment, each QC gain media 234C can be tuned to produce an output beam 216C having a different center wavelength in the MIR range. As a result thereof, the resulting overall output beam 217 can include multiple discrete wavelengths. With this design, each of the QC gain medias 234C can be tuned to generate an output beam 216C that propagates through a different inclement condition 22 (illustrated in Figure 1).

Figure 2D is a simplified side illustration of yet another embodiment of another MIR laser source 212D having features of the present invention. In this embodiment, the MIR laser source 212D includes a plurality of QC gain medias 234D (three are illustrated) that each generates an output beam 216D. It should be noted that many of the components necessary to tune the QC gain medias 234D have been omitted from Figure 2D.

With the design illustrated in Figure 2D, in one embodiment, each QC gain media 234D can be tuned to produce an output beam 216D having a different center wavelength in the MIR range. With this design, each of the QC gain medias 234D can be tuned to generate an output beam 216D that propagates through a different inclement condition 22 (illustrated in Figure 1).

Figure 3 is a graph that illustrates one non-exclusive embodiment of a power profile (power versus time) directed to a gain media 234 (illustrated in Figure 2). In one embodiment, the laser electronic controller 240 (illustrated in Figure 2) pulses the power (as opposed to constant power) directed to the gain media 234 in a low duty cycle wave form. In alternative non-exclusive embodiments, the laser electronic controller 240 controls the duty cycle (ratio of the amount of time at peak power over the total cycle time) to be approximately 0.5%, 5%, 10%, 15%, 20%, or 100%.

As provided herein, in one non-exclusive example, the laser electronic controller 240 directs approximately 1-20 watts peak electrical power for a relatively short period of time (e.g. 100-200 nanoseconds), and the laser electronic controller 240 directs low or no power to the gain media 234 between the peaks. With this design, relatively high power is directed to the gain media 234 for short, spaced apart periods of time. As a result thereof, the gain media 234 lases with little to no heating of the core of the gain media 234, the average power directed to the gain media 234 is relatively low, and the desired average optical power of the output beam 16 can be efficiently achieved. It should be noted that as the temperature of the gain media 234 increases, the efficiency of the gain media 234 decreases. With this embodiment, the pulsing of the gain media 234 keeps the gain media 234 operating efficiently, minimizes heat generation, and the overall system utilizes relatively low power. As a result thereof, the MIR laser source 12 can be battery powered.

It should be noted that the pulsed power to the QC gain media 234 can be used in concert with the MIR imager 16 (illustrated in Figure 1) to enable signal processing techniques to improve image quality. For example, MIR imager 16 can be controlled to capture the images 18 in conjunction with the pulses of power directed to the QC gain media 234. This feature is described in more detail with reference to Figure 4B.

Alternatively, the laser electronic controller 240 directs constant power (as opposed to pulsed power) to the gain media 234.

Figure 4A is a simplified side illustration of one, non-exclusive embodiment of the MIR imager 14. In this embodiment, the MIR imager 14 includes a capturing system 452 (illustrated as a box in phantom) that captures information of the scene in front of the MIR imager 14; a lens assembly 454 that focuses light on the capturing system 452; and an imager control system 456 in addition to the imager display 26 (illustrated away from the rest of the MIR imager 14). The design of each of these components can be varied to achieve the desired resolution of the MIR imager 14. Further, for example the MIR imager 14 could be designed with fewer or more components than are illustrated in Figure 4A.

In one embodiment, the capturing system 452 include an image sensor 452A (illustrated in phantom), a filter assembly 452B (illustrated in phantom), and a storage system 452C (illustrated in phantom). The image sensor 452A receives the light that passes through the filter assembly 452B and converts the light into electricity. Non-exclusive examples of suitable image sensors 452A can include a family of image sensors known as thermal electric cameras, vanadium oxide, microbolometers, quantum well infrared photodetectors, or thermal light valve technology sold by Redshift Systems Corporation, located in Burlington, MA. The filter assembly 452B limits the wavelength of the light that is directed at the image sensor 452A. For example, the filter assembly 452B can be designed to transmit all light in the MIR range, and block all light having a wavelength that is greater or lesser than the MIR range. Alternatively, the filter assembly 452B can be designed to transmit light at only a selected portion (e.g. the 8-12 micron range) of the MIR range, and block all light having a wavelength that is greater or lesser than the selected portion of the MIR range.

The storage system 452C stores the various images. Non-exclusive examples of suitable storage systems 452C include flash memory, a floppy disk, a hard disk, or a writeable CD or DVD.

The imager control system 456 is electrically connected to and controls the operation of the electrical components of the MIR imager 14. The imager control system 456 can include one or more processors and circuits and the control system 456 can be programmed to perform one or more of the functions described herein. The imager control system 456 receives information from the image sensor 452A and generates the image 18. Additionally, or alternatively, the image control system 456 can further enhance the image 18 with color or other features that will further identify the located object 20.

The imager display 26 can be an LCD screen or another type of display that is capable of displaying the image 18.

In one embodiment, the MIR imager 14 is power by an external source, such as the vehicle 24 (illustrated in Figure 1). Alternatively, the MIR imager 14 can be portable and can be powered by a battery.

Figure 4B is a simplified side illustration of another embodiment of a MIR imager 414 having features of the present invention. In this embodiment, to generate each displayed image 418, the capturing system 452B (illustrated as a box in phantom) is controlled by the image control system 456B to capture an illuminated first image (frame) 419 when the MIR laser source 12 (illustrated in Figure 1) is illuminating the scene, and a non-illuminated second image (frame) 421 when the MIR laser source 12 is not illuminating the scene. For example, the first image 419 can be captured when the pulsed power is directed to the MIR laser source 12, and the second image 421 can be captured when the pulsed power is not directed to the MIR laser source 12. With this design, the MIR imager 414B captures the image frames 419, 421 in synchronization with one or more pulses of the MIR laser source 12.

In this example, the image control system 456B can make use of frame subtraction to enhance the contrast of the beam in certain applications. More specifically, the image control system 456B can subtract the second image 421 from the first image 419 to generate the displayed image 418 that is displayed on the display 426. In this way, the contrast of the MIR laser source 12 on a target is enhanced by subtracting the non-illuminated frame 421 from the illuminated frame 419.

Figure 5 illustrates a combination with another embodiment of how an optical illuminator assembly 510 is useful for locating and/or seeing an object 520 in inclement conditions 522 (illustrated as small circles). The embodiment illustrated in Figure 5 is somewhat similar to the embodiment illustrated in Figure 1. In Figure 5, the plurality of spaced apart MIR laser sources 512 are again positioned near the object 520, the MIR imager 514 is again secured to the vehicle 524, and the MIR laser sources 512 and the MIR imager 514 are again spaced apart. However, in this example, the object 520 is a harbor inlet to a harbor, and the vehicle 524 is a boat. With this design, a person 528 operating the vehicle 524 will be able to locate the harbor inlet 520 in inclement conditions 522.

In Figure 5, the plurality of spaced apart MIR laser sources 512 are positioned near and line the harbor inlet 520, and each MIR laser source 512 generates the output beam 516 that is directed generally upward. For example, the MIR laser sources 512 can partly or fully line one or both sides of the harbor inlet 520. In Figure 5, the MIR laser sources 512 are positioned adjacent to both sides of the harbor inlet 520. Alternatively, or additionally, one or more laser sources 512 may be used at one end of a channel 517 to provide directional guidance to guide a boat directly down a safe course or channel.

In Figure 5, the MIR imager 514 is secured to the boat frame and the MIR imager 514 includes an imager display 526 (illustrated away from the MIR imager 514 for clarity) that is viewable by a user 528, e.g. a boat captain. For example, the imager display 526 can be secured to the dash of the boat 524. Alternatively, the imager display 526 can be incorporated into goggles worn by the user 528. Still alternatively, the entire MIR imager 514 can be incorporated into goggles worn by the user 528.

In Figure 5, the MIR imager 514 is directed horizontally towards the harbor inlet 520, and the image 518 provided the MIR imager 514 includes a plurality of beams of light 530 that are positioned adjacent to the harbor inlet 520. With this design, the optical illuminator assembly 10 is useful for the boat captain 528 to locate ("see") the outline of the harbor inlet 520 in inclement conditions 522.

Figure 6 illustrates a combination including another embodiment of how an optical illuminator assembly 610 is useful for locating and/or seeing an object 620 in inclement conditions 622 (illustrated as small circles). In Figure 6, a single MIR laser source 612 is positioned near the MIR imager 614 (e.g. on the same side of the inclement conditions 622), and both the MIR laser source 612 and the MIR imager 614 are secured to the vehicle 624. Moreover, in this example, the object 620 is an airport runway, and the vehicle 624 is an aircraft. With this design, a person 628 operating the vehicle 624 will be better able to locate the airport runway 620 in inclement conditions 622.

In Figure 6, the MIR laser source 612 generates the output beam 616 that is directed generally forward and downward. Further, in Figure 6, both the MIR laser source 612 and the MIR imager 614 are secured to the aircraft 624 and the MIR imager 614 includes the imager display 626 (illustrated away from the MIR imager 614 for clarity) that is viewable by a user 628, e.g. a pilot. For example, the imager display 626 can be secured to the dash of the aircraft 624. Alternatively, the imager display 626 can be incorporated into goggles worm by the user 628. Still alternatively, the entire MIR imager 614 and possible the MIR laser source 612 can be incorporated into goggles worm by the user 628.

In this example, the image 618 captured by the MIR imager 614 includes at least a portion of the object 620 illuminated by the output beam 616 from the MIR laser source 612. With this design, the pilot 628 will be better equipped to locate the runway in inclement conditions 622.

In one embodiment, the output beam 616 and the MIR imager 614 can be moved relative to the aircraft 624. For example, in one embodiment, the output beam 616 and the MIR imager 614 can be moved (manually or electrically) side to side and/or up and down to change the area in which the MIR imager 614 is viewing.

In Figure 6, the image 618 provided the MIR imager 614 includes a portion of the runway 630 that is illuminated by the output beam 616. Backscattered light from the runway is captured by the MIR imager 614 to enhance the image 618 of the object 620. With this design, the optical illuminator assembly 610 is useful for the pilot 628 to illuminate the runway 620 in inclement conditions 622 for better visibility through the MIR imager 614.

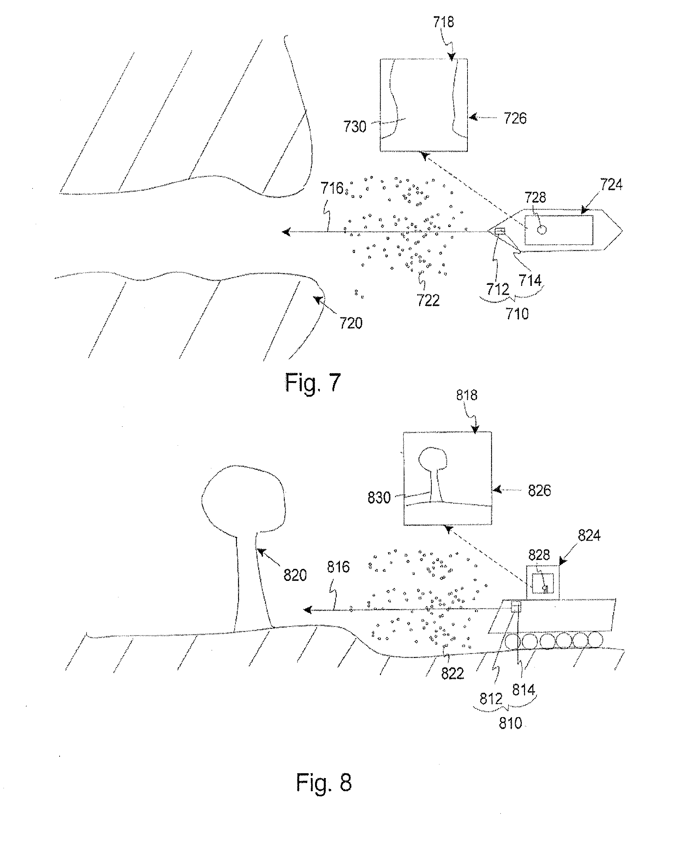

Figure 7 illustrates a combination including still another embodiment of how an optical illuminator assembly 710 is useful for locating and/or seeing an object 720 in inclement conditions 722 (illustrated as small circles). The embodiment illustrated in Figure 7 is somewhat similar to the embodiment illustrated in Figure 6. However, in this example, the object 720 is a harbor inlet to a harbor, and the vehicle 724 is a boat. With this design, a person 728 operating the vehicle 724 will be able to locate the harbor inlet 720 in inclement conditions 722.

In Figure 7, the MIR laser source 712 generates the output beam 716 that is directed generally forward. Further, in Figure 7, both the MIR laser source 712 and the MIR imager 714 are secured to the boat 724 and the MIR imager 714 includes the imager display 726 (illustrated away from the MIR imager 714 for clarity) that is viewable by a user 728, e.g. a boat captain. For example, the imager display 726 can be secured to the dash of the boat 724. Alternatively, the imager display 726 can be incorporated into goggles worm by the user 728. Still alternatively, the entire MIR imager 714 and possible the MIR laser source 712 can be incorporated into goggles worm by the user 728.

In this example, the image 718 captured by the MIR imager 714 again includes at least a portion of the object 720 illuminated by the output beam 716 from the MIR laser source 712.

In one embodiment, the output beam 716 and the MIR imager 714 can be moved relative to the boat 724. For example, in one embodiment, the output beam 716 and the MIR imager 714 can be moved side to side and/or up and down to change the area in which the MIR imager 714 is viewing.

In Figure 7, the image 718 provided the MIR imager 714 includes a portion of the harbor inlet 730 that is illuminated by the output beam 716. Backscattered light from the harbor inlet is captured by the MIR imager 714 to enhance the image 718 of the object 720. With this design, the optical illuminator assembly 710 is useful for the boat captain 728 to locate the harbor inlet in inclement conditions 722.

Figure 8 illustrates a combination including another embodiment of how an optical illuminator assembly 810 is useful for locating and/or seeing an object 820 in inclement conditions 822 (illustrated as small circles). The embodiment illustrated in Figure 8 is somewhat similar to the embodiment illustrated in Figures 6 and 7. However, in this example, the object 820 is a tree, and the vehicle 824 is a tank. With this design, a person 828 operating the vehicle 824 will be able to locate the tree 820 or any other object to better navigate the tank 824 in inclement conditions 822.

In Figure 8, the MIR laser source 812 generates the output beam 816 that is directed generally forward and downward. Further, in Figure 8, both the MIR laser source 812 and the MIR imager 814 are secured to the tank 824 and the MIR imager 814 includes the imager display 826 that is viewable by a user 828, e.g. a tank driver. For example, the imager display 826 can be secured to the dash of the tank 824. Alternatively, the imager display 826 can be incorporated into goggles worm by the user 828. Still alternatively, the entire MIR imager 814 and possible the MIR laser source 812 can be incorporated into goggles worm by the user 828.

In this example, the image 818 captured by the MIR imager 814 again includes at least a portion of the object 820 illuminated by the output beam 816 from the MIR laser source 812. In this embodiment, the output beam 816 and the MIR imager 814 can be moved relative to the tank 824.

In Figure 8, the image 818 provided the MIR imager 814 includes the tree 830 and a portion of the terrain that is illuminated by the output beam 816. Backscattered light from the terrain is captured by the MIR imager 814 to enhance the image 818 of the object 820.

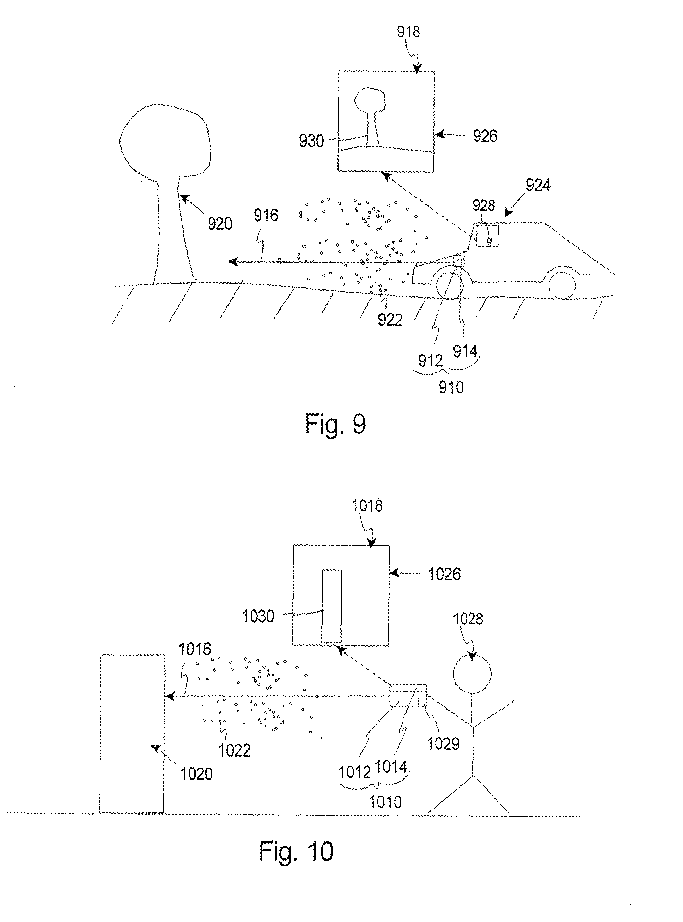

Figure 9 illustrates a combination including still another embodiment of how an optical illuminator assembly 910 is useful for locating and/or seeing an object 920 in inclement conditions 922 (illustrated as small circles). The embodiment illustrated in Figure 9 is somewhat similar to the embodiment illustrated in Figures 6-8. In this example, the object 920 is a tree, and the vehicle 924 is a car. With this design, a person 928 operating the vehicle 924 will be able to locate the tree 920 or any other object to better navigate the car 924 in inclement conditions 922.

In Figure 9, the MIR laser source 912 generates the output beam 916 that is directed generally forward. Further, in Figure 9, both the MIR laser source 912 and the MIR imager 914 are secured to the car 924 and the MIR imager 914 includes the imager display 926 that is viewable by a user 928, e.g. a car driver. For example, the imager display 926 can be secured to the dash of the car 924. Alternatively, the imager display 926 can be incorporated into goggles worm by the user 928. Still alternatively, the entire MIR imager 914 and possible the MIR laser source 912 can be incorporated into goggles worm by the user 928.

In this example, the image 918 captured by the MIR imager 914 again includes at least a portion of the object 920 illuminated by the output beam 916 from the MIR laser source 912. In Figure 9, the image 918 provided the MIR imager 914 includes the tree 930 and a portion of the terrain that is illuminated by the output beam 916. More specifically, backscattered light from the terrain is captured by the MIR imager 914 to enhance the image 918 of the object 920. Moreover, in this embodiment, the output beam 916 and the MIR imager 914 can be moved relative to the car 924.

Figure 10 illustrates a combination that includes another embodiment of how an optical illuminator assembly 1010 is useful for locating and/or seeing an object 1020 in inclement conditions 1022 (illustrated as small circles). The embodiment illustrated in Figure 10 is somewhat similar to the embodiments illustrated in Figures 6-9. However, in this example, the optical illuminator assembly 1010 is a hand held device that is used by a person 1028 to locate the object 1020 (illustrated as a box).

In Figure 10, the MIR laser source 1012 generates the output beam 1016 that is directed generally forward. Further, in Figure 10, both the MIR laser source 1012 and the MIR imager 1014 are secured to a common housing, and the MIR imager 1014 includes the imager display 1026 that is viewable to the person 1028. Alternatively, the MIR laser source 1012 can be in a separate housing from the MIR imager 1014. Further, the MIR laser source 1012 and the MIR imager 1014 can share a common battery assembly 1029 or have separate batteries.

In the example illustrated in Figure 10, the image 1018 captured by the MIR imager 1014 again includes at least a portion of the object 1020 illuminated by the output beam 1016 from the MIR laser source 1012. In Figure 10, the image 1018 provided the MIR imager 1014 includes the box 1030. In this embodiment, backscattered light from the area is captured by the MIR imager 1014 to enhance the image 1018 of the object 1020.

In this embodiment, the optical illuminator assembly 1010 can be moved by the person to change the area in user is viewing.

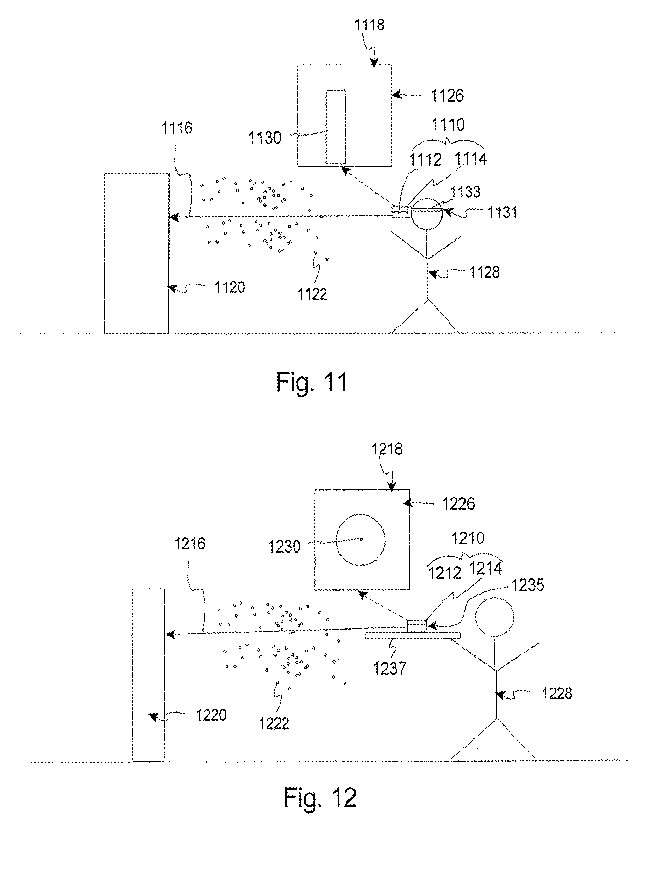

Figure 11 illustrates a combination including another embodiment of how an optical illuminator assembly 1110 is useful for locating and/or seeing an object 1120 in inclement conditions 1122 (illustrated as small circles). The embodiment illustrated in Figure 11 is similar to the embodiment illustrated in Figure 10. However, in this example, the optical illuminator assembly 1110 is incorporated into a binocular assembly 1131 that can be worn as goggles (or hand held) by the person 1128 to locate the object 1120 (illustrated as a box). In this embodiment, the goggles 1131 includes an attacher 1133 (e.g. a strap or helmet) for securing the goggles 1131 to the person 1128.

In Figure 11, the MIR laser source 1112 generates the output beam 1116 that is directed generally forward. Further, in Figure 11, both the MIR laser source 1112 and the MIR imager 1114 are secured to a common housing, and the MIR imager 1114 includes the imager display 1126 that is viewable the person 1128. Alternatively, the MIR laser source 1112 can be in a separate housing from the MIR imager 1114 and/or the imager display 1126 may be the only component incorporated into the goggles.

In this example, the image 1118 captured by the MIR imager 1114 again includes at least a portion of the box 1130 illuminated by the output beam 1116 from the MIR laser source 1112. In Figure 11, the image 1218 provided the MIR imager 1214 includes the box 1130. In this embodiment, backscattered light from the area is captured by the MIR imager 1114 to enhance the image 1118 of the object 1120.

In this embodiment, the optical illuminator assembly 1110 can be moved by the person to change the area in user is viewing.

Figure 12 illustrates a combination including another embodiment of how an optical illuminator assembly 1210 is useful for locating and/or seeing an object 1220 in inclement conditions 1222 (illustrated as small circles). In this example, the optical illuminator assembly 1210 is incorporated into a weapon sight 1235 of a weapon 1237 (such as a gun, or shoulder fired missile) that is viewable by the person 1228 to locate the object 1220, e.g. a target or game (illustrated as a box) or in one embodiment, to provide a spot of light on the target that is bore-sighted to the gun for aiming purposes. In one embodiment, the size of the beam may be adjustable to allow a wide beam for general illumination or a narrow beam for aiming.

In Figure 12, the MIR laser source 1212 generates the output beam 1216 that is directed generally forward. Further, in Figure 12, both the MIR laser source 1212 and the MIR imager 1214 are secured to a common housing, and the MIR imager 1214 includes the imager display 1226 that is viewable the person 1228. Alternatively, the MIR laser source 1212 can be in a separate housing from the MIR imager 1214.

In this example, the image 1218 captured by the MIR imager 1214 again includes at least a portion of the object 1220 illuminated by the output beam 1216 from the MIR laser source 1212. In Figure 12, the image 1218 provided the MIR imager 1214 includes the target 1230.

There are many uses for the optical illuminator assembly disclosed herein, and only of few, non-exhaustive examples are illustrated in the Figures. Many of these systems are useful to (i) first responders, e.g. fireman and other rescue service personnel that need to enter atmospheres filled with smoke and other particulates to rescue trapped individuals and to try to stop further damage, (ii) law enforcement and intelligence workers would benefit from technology enabling surveillance operations to continue in all weather and light conditions, (iii) security monitoring workers would benefit from technology enabling the monitoring of entrances and fence lines, (iv) soldiers benefit from the ability to target through inclement weather, or (v) recreational people, e.g. hunters and hikers etc. would benefit from being able to see in inclement weather conditions.

The various embodiments disclosed herein have one thing in common in that they use a MIR light source. This offers illumination in a variety of atmospheric conditions where other wavelengths of light would be absorbed. In essence this technology enables operation in all weather and light conditions. So any situation where seeing through an otherwise opaque atmosphere would be useful should be covered by the invention description. The systems will also work at night and other low to zero light conditions, such as in caves where cold temperatures may have stabilized, thereby limiting the effectiveness of thermal cameras alone.

While the particular optical illuminator assembly as shown and disclosed herein is fully capable of obtaining the objects and providing the advantages herein before stated, it is to be understood that it is merely illustrative of the presently preferred embodiments of the invention and that no limitations are intended to the details of construction or design herein shown other than as described in the appended claims.

## Claims

1. An optical illuminator assembly for locating an object, the optical illuminator assembly comprising:
a MIR laser source that includes a semiconductor laser that emits an output beam that is in the MIR range, the output beam being useful for locating the object.

2. The optical illuminator assembly of claim 1 further comprising a MIR imager that captures an image of light in the MIR range near the object.

3. The optical illuminator assembly of claim 2 wherein the MIR imager includes an image display that displays the captured image.

4. A combination comprising: the optical illuminator assembly of claim 3, and a vehicle that transports a person, wherein the image display is viewable to the person being transported by the vehicle.

5. The combination of claim 4 wherein the MIR imager and the MIR laser source are secured to the vehicle.

6. A combination comprising: the optical illuminator assembly of claim 3, and a gun, wherein the MIR laser source is secured to the gun, and wherein the image display is viewable to a person using the gun.

7. The optical illuminator assembly of claim 3 further comprising a battery assembly that powers the MIR laser source and the MIR imager, and wherein the optical illuminator assembly is portable.

8. The optical illuminator assembly of claim 7 further comprising an attacher for attaching at least a portion of the MIR imager to a user.

9. A combination comprising: the optical illuminator assembly of claim 3 integrated into a binocular assembly.

10. The optical illuminator assembly of claim 3 wherein power is directed to the MIR laser source in synchronization with the MIR imager capturing the image.

11. The optical illuminator assembly of claim 1 further comprising a plurality of spaced apart MIR laser sources that are positioned near the object.

12. A combination comprising: the optical illuminator assembly of claim 1, and an airport runway, wherein the MIR laser source is positioned near the airport runway.

13. A combination comprising: the optical illuminator assembly of claim 1, and a harbor inlet, wherein the MIR laser source is positioned near the harbor channel, inlet, or other position to allow directional guidance.

14. An optical illuminator assembly for locating an object in inclement conditions, the optical illuminator assembly comprising:
a MIR laser source that includes a semiconductor laser that emits an output beam that is in the MIR range, the output beam being directed at the object through the atmospheric conditions; and
a MIR imager that captures an image of light in the MIR range, wherein the captured image includes at least a portion of the object illuminated by the output beam, the MIR imager including an image display that displays the captured image.

15. A combination comprising: the optical illuminator assembly of claim 14, and a vehicle that transports a person, wherein the image display is viewable to the person being transported by the vehicle.
